Europäisches Patentamt

European Patent Office

Office européen des brevets

(11) Veröffentlichungsnummer: **0 340 555**
**A2**

## EUROPÄISCHE PATENTANMELDUNG

(21) Anmeldenummer: 89107180.5

(22) Anmeldetag: 21.04.89

(51) Int. Cl.⁴: **G02B 6/18**

(30) Priorität: 28.04.88 DE 3814299

(43) Veröffentlichungstag der Anmeldung:
08.11.89 Patentblatt 89/45

(84) Benannte Vertragsstaaten:
AT BE CH DE ES FR GB IT LI LU NL SE

(71) Anmelder: HOECHST AKTIENGESELLSCHAFT
Postfach 80 03 20
D-6230 Frankfurt am Main 80(DE)

(72) Erfinder: Herbrechtsmeier, Peter, Dr.
Friedrich-Stolze-Strasse 10
D-6240 Königstein/Taunus(DE)
Erfinder: Wieners, Gerhard, Dr.
Glauburgstrasse 87
D-6000 Frankfurt am Main(DE)
Erfinder: Kuhls, Jürgen, Dr.
Unghausen 16A
D-8263 Burghausen(DE)
Erfinder: Tschacher, Manfred
Saliterweg 7
D-8261 Emmerting(DE)
Erfinder: Fitz, Herbert, Dr.
Kantstrasse 41
D-8269 Burgkirchen(DE)

(54) Lichtwellenleiter.

(57) Ein Lichtwellenleiter mit Kern/Mantel-Struktur dessen Mantel aus einem mit einem Trisalkoxyvinyl-silan modifizierten und vernetzten Polymer auf Basis Vinylidenfluorid und mindestens einem anderen fluorhaltigen Vinylmonomeren besteht, ist für Übertragungslängen von ca. 10 bis 100 m geeignet und kann auch bei einer Temperatur über 100°C ohne wesentliche Einschränkung der Übertragungslänge verwendet werden.

## Lichtwellenleiter

Die Erfindung bezieht sich auf Lichtwellenleiter (LWL), welche sich für die Übertragung von Licht, beispielsweise von Lichtsignalen für die Datenübertragung, eignen.

Die Lichtwellenleiter bestehen aus einem Kern und einem Mantel, die beide aus (unterschiedlichen) transparenten Materialien bestehen, wobei das Kernmaterial immer einen um mindestens ein Prozent höheren Brechungsindex aufweist als das Mantelmaterial. Der Lichtwellenleiter ist im Allgemeinen fadenförmig und weist einen kreisförmigen Querschnitt auf. Ein Mantelmaterial ist mit ringförmigen Querschnitt in einer dünnen Schicht auf den fadenförmigen Kern aufgetragen.

Die bisher für Lichtwellenleiter am häufigsten eingesetzten Materialien sind Homo- und Copolymere von Methacrylsäureestern im Kern und Homo- und Copolymere von Methacrylsäureestern fluorhaltiger Alkohole oder Copolymere des Vinylidenfluorids mit anderen fluorhaltigen Monomeren im Mantel.

Bekannt ist, daß fluorhaltige Polymere, die im Wesentlichen aus Vinylidenfluorid (VdF), Tetrafluorethylen (TFE) und/oder Hexafluorpropen (HFP) bestehen, als Mantelmaterialien für Lichtwellenleiter eingesetzt wurden, die als Mantelmaterial Homo- und Copolymere aus Methylmethacrylat (MMA), Styrol und Methacrylsäureestern aliphatischer Alkohole im Kern enthalten (EP-A 154 339, EP-A 97 325, DE-A 24 55 265). Die fluorhaltigen Mantelmaterialien neigen dazu, sich durch Kristallisation der VdF- und TFE- Anteile zu trüben. Andererseits können solche Polymere, besonders solche mit hohen Hfp-Anteilen, klebrig und damit ungeeignet als LWL-Mantelmaterial sein oder sie haften schlecht auf dem Kernmaterial, insbesondere wenn der VdF-Anteil niedrig gewählt wurde.

Copolymere mit hohen TFE-Anteilen lassen sich schlecht thermoplastisch zu einem LWL-Mantel verarbeiten.

Bekannt ist ferner, daß sich die Dauergebrauchstemperatur von Lichtwellenleitern verbessern läßt, wenn man den Kern und/oder den Mantel des Lichtwellenleiters nach der Herstellung desselben ggf. unter dem Einfluß von ionisierender Strahlung mit Hilfe von polyfunktionellen Vinylverbindungen oder von Glycidylgruppen enthaltenden Hilfsstoffen vernetzt (EP-A 171294). Unvollständig umgesetzte Vinylverbindungen können die Eigenschaften des Lichtwellenleiters bei längerem Gebrauch verschlechtern, Glycidylgruppen erhöhen die Wasseraufnahme des Kernmaterials.

Bekannt ist außerdem, daß die Dauergebrauchstemperatur von Lichtwellenleitern, deren Kern oder Mantel aus einem geeigneten Polymeren besteht, durch Behandlung mit ionisierender Strahlung erhöht werden kann. (JP 61/035 404 Es ist jedoch schon seit langem bekannt, daß Polymere, die MMA enthalten, sich unter dem Einfluß ionisierender Strahlen gelbbraun verfärben und abgebaut werden. Dadurch wird die Transparenz des Kernmaterials beeinträchtigt und die mechanischen Eigenschaften des Lichtwellenleiters verschlechtern sich.

Ebenso ist bekannt, daß Schläuche aus fluorhaltigen Polymeren, die VdF, TFE und HFP enthalten und die mit einer klaren transparenten Flüssigkeit gefüllt wurden, als Lichtwellenleiter benutzt werden können (EP-A 246 552).

Schließlich ist bekannt, daß man Polymere, die VdF enthalten, durch Umsetzung des Polymeren mit der Verbindung Dimethylmethoxyvinylsilan und unter Einwirkung von Wasser nach der thermoplastischen Verarbeitung vernetzen kann (DE-A 33 27 596).

Aufgabe war die Bereitstellung eines hochtransparenten Polymermaterials aus leicht zugänglichen Monomeren zur Herstellung des Mantels von Lichtwellenleitern, die für Übertragungslängen von 10 bis 100 Metern geeignet sind und die auch bei einer Temperatur über 100 $^\circ$C ohne wesentliche Einschränkung der Übertragungslänge verwendet werden können.

Es wurde nun gefunden, daß ein Lichtwellenleiter, dessen Mantel aus einer transparenten thermoplastischen Formmasse besteht, welche sich von den Monomeren Vinylidenfluorid, Tetrafluorethylen und Hexafluorpropylen ableitet, diese Aufgabe zu lösen vermag.

Somit betrifft die Erfindung einen Lichtwellenleiter mit Kern/Mantel-Struktur, dessen Kern aus einem Polymer mit einem Brechungsindex $n(K)$ und dessen Mantel aus einem Polymeren mit einem Brechungsindex $n(M)$ besteht, wobei $n(K)/n(M)$ > 1,01 ist, dadurch gekennzeichnet, daß der Kern aus einem Polycarbonat oder aus einem Polymer besteht, welches Einheiten enthält, die sich vom Styrol, von einem substituierten Styrol, einem Acrylat, einem Methacrylat oder einem Fluoracrylat ableiten, und der Mantel aus einem mit 0,1 bis 10 Gew.-% eines Trisalkoxyvinylsilans in Gegenwart von 0,5 bis 5 Gew.-% eines Peroxids, jeweils bezogen auf das unmodifizierte Polymer, modifizierten und vernetzten Polymer besteht, welches Einheiten enthält, die sich, jeweils bezogen auf das unmodifizierte Polymer, zu 30 bis 90 Gew.-% vom Vinylidenfluorid und zu 70 bis 10 Gew.-% von mindestens einem anderen fluorhaltigen Vinylmonomeren ableiten.

Die Erfindung betrifft weiterhin ein Verfahren zur Herstellung eines Lichtwellenleiters mit Kern/Mantel-Struktur, dessen Kern aus einem Polymer mit einem Brechungsindex n(K) und dessen Mantel aus einem Polymer mit einem Brechungsindex n(M) besteht, wobei n(K)/n(M) >1,01 ist, durch Extrusion des Kerns und Umgeben des Kerns mit einem Mantel, dadurch gekennzeichnet, daß der Kern aus einem Polycarbonat oder aus einem Polymer besteht, welches Einheiten enthält, die sich vom Styrol, von einem substituierten Styrol, einem Acrylat, einem Methacrylat oder einem Fluoracrylat ableiten, und mit einem Mantel umgeben wird, welcher aus einem mit 0,1 bis 10 Gew.-% eines Trisalkoxyvinylsilans in Gegenwart von 0,5 bis 5 Gew.-% eines Peroxids, jeweils bezogen auf das unmodifizierte Polymer, modifizierten und vernetzten Polymer besteht, welches Einheiten enthält, die sich, jeweils bezogen auf das unmodifizierte Polymer, zu 30 bis 90 Gew.-% vom Vinylidenfluorid und zu 70 bis 10 Gew.-% von mindestens einem anderen fluorhaltigen Vinylmonomeren ableiten.

Der Kern des erfindungsgemäßen Lichtwellenleiters besteht aus einem Polycarbonat oder einem Polymer, welches Einheiten enthält, die sich vom Styrol, einem substituierten Styrol, einem Acrylat, einem Methacrylat oder einem Fluoracrylat ableiten. Bevorzugt werden solche Polymere verwendet, die einen höheren Glaspunkt als PMMA aufweisen, wodurch die Dauergebrauchstemperatur der Lichtwellenleiter weiter gesteigert werden kann. Dazu gehören Polymere aus α-Fluoracrylsäuremethylester (FA-M), aus α-Fluoracrylsäureestern, Methacrylsäureestern und Acrylsäureestern halogenierter Phenole, mono- und bicyclischer Alkohole und halogenierter offenkettiger, alicyclischer und bicyclischer Alkohole und Copolymere dieser Verbindungen untereinander oder mit MMA, α-Fluoracrylsäurehexafluorisopropylester oder anderen α-Fluoracrylsäureestern und Methacrylsäureestern, die aliphatische oder fluorierte aliphatische Alkoholkomponenten enthalten, sowie Polycarbonate. Besonders bevorzugt werden Polymere, die im wesentlichen aus α-Fluoracrylsäuremethylester, aus α-Fluoracrylsäureestern, Methacrylsäureestern und Acrylsäureestern drei-, vier- und fünffach fluorierter, chlorierter und bromierter Phenole, des 1,4,5,6,7,7-Hexachlor- und Hexabrombicyclo-(2.2.1)-hept-5-en-2-ols, des 1,4,5,6,7-Pentachlor- und des 1,4,5,6-Tetrachlorbicyclo- (2.2.1)-hept-5-en-2-ols, α-Fluoracrylsäure- und Methacrylsäureestern des Cyclohexanols, des 3,3,5-Trimethylcyclohexanols, des 2-Methylcyclopentanols, des Borneols, des Isoborneols, des Norborneols bestehen, sowie Polycarbonat. Besonders bevorzugt sind Polymere, die im wesentlichen aus Acrylsäure-und Methacrylsäurepentachlorphenylester (MA-PCP), Methacrylsäurenorbornylester und aus Methacrylsäure-und Acrylsäure-1,4,5,6,7,7-hexachlorbicyclo- (2.2.1)-hept-5-en-2-ylester, bestehen, sowie Polycarbonat.

Diese Polymeren zeichnen sich durch einen Brechungsindex von über 1,49 und Glasübergangstemperaturen von mehr als 140°C aus. Sie sind völlig amorph, wie Untersuchungen des Schmelzverhaltens mittels DSC zeigen, und transparent.

Der Mantel des erfindungsgemäßen Lichtwellenleiters besteht aus einem Polymer welches Einheiten enthält, die sich vom Vinylidenfluorid (VdF) sowie von einem oder mehreren anderen ungesättigten fluorhaltigen Verbindungen ableiten, und welches durch Aufpfropfen einer Alkenylalkoxysilanverbindung auf das Vinylidenpolymerisat in Gegenwart eines peroxischen organischen Radikalbildners und Zugabe eines Silanol-Kondensationskatalysators modifiziert und durch Behandlung mit Wasserdampf oder einer wasserdampfhaltigen Atmosphäre vernetzt wird.

Als weitere ungesättigte fluorhaltige Verbindungen können Vinylfluorid, Trifluorethylen, Tetrafluorethylen, Pentafluorpropylen, Hexafluorpropylen, Chlortrifluorethylen oder andere fluorhaltige Alkene, teilweise oder vollständig fluorierte Alkylvinylether wie perfluorpropylvinylether oder ω-H-Perfluoralkylvinylether oder auch fluorhaltige Carbonylverbindungen, wie Hexafluoraceton, jeweils allein oder in Kombination mit einer oder mehreren der genannten Verbindungen mit Vinylidenfluorid copolymerisiert werden.

Von diesen fluorhaltigen Verbindungn werden Trifluorethylen, Tetrafluorethylen, Hexafluorpropen, Chlortrifluorethylen, Perfluorpropylvinylether und Hexafluoraceton bevorzugt mit Vinylidenfluorid copolymerisiert.

Besonders bevorzugt werden Tetrafluorethylen, Hexafluorpropen und Hexafluoraceton mit Vinylidenfluorid copolymerisiert.

Das unmodifizierte Polymere enthält Einheiten, welche sich zu 30 bis 90, vorzugsweise 35 bis 90 Gew.-% vom Vinylidenfluorid und zu 70 bis 10, vorzugsweise 65 bis 10 Gew.-% von mindestens einem anderen fluorhaltigen Vinylmonomeren ableiten. Typische Zusammensetzungen sind die folgenden:
Copolymere aus VdF und TFE enthalten
50 bis 90, vorzugsweise 60 bis 80 Gew.-% VdF,
50 bis 10, vorzugsweise 40 bis 20 % TFE,
solche aus VdF und HFP enthalten
3 bis 18, vorzugsweise 3 bis 10 Gew.-% HFP,
97 bis 82, vorzugsweise 97 bis 90 Gew.-% VdF,
solche aus VdF und HFA
5 bis 25, vorzugsweise 10 bis 20 Gew.-% HFA,
35 bis 75, vorzugsweise 90 bis 80 Gew.-% VdF,
Terpolymere aus VdF, HFP und TFE enthalten
30 bis 50, vorzugsweise 35 bis 45 Gew.-% VdF,
25 bis 55, vorzugsweise 35 bis 45 Gew.-% TFE,
15 bis 25, vorzugsweise 17 bis 22 Gew.-% HFP,

jeweils bezogen auf die Gesamtmenge des unmodifizierten Polymers.

Diese Copolymere werden durch Pfropfung mit einem Trialkoxyvinylsilan, beispielsweise Trimethoxyvinylsilan, Triethoxyvinylsilan, Tris(ß-methoxyethoxy)vinylsilan oder $\gamma$-Methacryloxypropyltrimethoxysilan, vorzugsweise Trimethoxyvinylsilan, in Gegenwart eines geeigneten Peroxids, z.B. Dicumylperoxid, modifiziert, indem 0,1 bis 10 Gew.-% des Silans und 0,5 bis 5 Gew.-% des Peroxids, bezogen auf das unmodifizierte Polymer bei einer Temperatur von 150 bis 200°, vorzugsweise von 180° bis 200°C in einem Kneter mit einer Schmelze des Polymeren umgesetzt werden.

Das modifizierte Polymere wird im Vakuum von flüchtigen Bestandteilen befreit und mit 0,01 bis 2 %, vorzugsweise 0,05 bis 0,5 Gew.-%, bezogen auf das unmodifizierte Copolymere, eines Silanol-Kondensationskatalysators vermischt und der Mantel des Lichtwellenleiters verfertigt.

An der Atmosphäre vernetzen die Copolymeren, sobald Wasserdampf anwesend ist. Verglichen mit den Polymeren für den Kern des Lichtwellenleiters weisen die Vinylidenfluoridcopolymeren für den Mantel einen wesentlich niedrigeren Brechungsindex auf. Die erfindungsgemäß für den Mantel einzusetzenden Polymeren sind ebenfalls transparent und fast vollständig amorph, wie aus Messungen des Schmelzverhaltens mit Hilfe der DSC hervorgeht.

Der erfindungsgemäße Lichtwellenleiter wird nach einem der nachstehenden Verfahren hergestellt:

1. Der Lichtwellenleiter wird durch gleichzeitige Extrusion des Kern- und des Mantelmaterials (Coextrusion) mit Hilfe einer Bikomponentendüse hergestellt. Der Mantel vernetzt anschließend unter Wasserdampfzutritt.

2. Das silanmodifizierte Fluorpolymere wird zu einem Schlauch verarbeitet, anschließend vernetzt, mit dem Präpolymerisat eines aushärtbaren Harzes gefüllt und das Harz zu einer transparenten, blasenfreien Masse mit einem höheren Brechungsindex, als das Fluorpolymere aufweist, ausgehärtet.

Der erfindungsgemäße Lichtwellenleiter mit einem vernetzten, vinylidenfluoridhaltigen und silanmodifizierten Polymeren als Mantelmaterial und PMMA als Kernmaterial ist im Temperaturbereich bis zu 100°C über 200 Stunden einsetzbar, ohne an Lichtdurchlässigkeit zu verlieren.

Der erfindungsgemäße Lichtwellenleiter weist eine hervorragende Lichtdurchlässigkeit auf, sofern bei der Herstellung der Polymermaterialien und des Lichtwellenleiters alle partikelartig-festen und löslichen Verunreinigungen sorgfältig entfernt und ausgeschlossen werden. Die Lichtdurchlässigkeit einer solchen Faser wird im allgemeinen durch die zur Lichtdurchlässigkeit reziproke Größe der Dämpfung D gemäß der Formel

$$D = 10 \cdot \log (I/I_0)/l,$$

in der Einheit dB/km ausgedrückt. In der Formel bedeutet I die Intensität des Lichts am Ende des Lichtwellenleiters, $I_0$ die Intensität am Anfang des Lichtwellenleiters, l die Länge des Lichtwellenleiters in km.

Ein Lichtwellenleiter, der aus den angegebenen Materialien nach den angegebenen Verfahren hergestellt und dessen Mantelmaterial mit Hilfe des angegebenen Verfahren vernetzt wurde, weist zugleich eine niedrige Lichtdämpfung, eine hohe Dauergebrauchstemperatur und gute mechanische Eigenschaften auf.

Die Erfindung wird anhand der folgenden Beispiele näher erläutert. Dabei wurde die Dämpfung eines Lichtwellenleiters auf die folgende Art und Weise bestimmt:

In ein Ende eines 10 bis 30 m langen Lichtleitfadens wurde mit Hilfe einer geeigneten Lichtquelle Licht eingekoppelt, während am anderen Ende die Intensität des austretenden Lichts gemessen wurde. Der Lichtleitfaden wurde anschließend jeweils um eine exakt bestimmte Länge von etwa einem Meter gekürzt und die austretende Lichtintensität erneut gemessen. Anhand einer logarithmischen Auftragung der gemessenen Lichtintensitäten gegen die jeweilige Länge des Lichtwellenleiters kann die Dämpfung aus der Steigung bestimmt werden.

Während der Dauer der Messung der Temperaturabhängigkeit der Dämpfung wurden die Verbindungen zwischen Lichtquelle bzw. Lichtdetektor und Lichtwellenleiter nicht verändert, lediglich ein exakt bestimmter Teil des Lichtwellenleiters in einem Klimaschrank im Luftbad auf die Meßtemperatur temperiert. Aus der Abschwächung der Lichtintensität am Ausgang des Lichtwellenleiters und der Länge des temperierten Fadenstücks kann die Änderung der Dämpfung im temperierten Teil des Lichtwellenleiters berechnet werden.

Zur Messung der Flexibilität wurden die Verbindungen zwischen Lichtquelle bzw. Lichtdetektor und dem Lichtwellenleiter nach einer ersten Messung der austretenden Lichtintensität nicht verändert. Ein Teil des Lichtleitfadens in der Mitte der Meßstrecke wurde dreimal um einen zylinderförmigen Stab gewunden, wieder von dem Stab abgewickelt und danach die Intensität des austretenden Lichts gemessen. Hatte die Intensität des Lichts nicht oder nicht wesentlich abgenommen, so wurde der Vorgang an einem Stab eines kleineren Durchmessers wiederholt. Der kleinste Biegeradius, der ohne Verschlechterung der Lichtwellenleiterqualität zugelassen werden kann, ist ein Maß für die Flexibilität des Lichtwellenleiters.

**Beispiel 1**

Zunächst wurde in bekannter Weise ein Copolymeres aus TFE, HFP und VdF in einem Suspensionsverfahren hergestellt. Die wäßrige Flotte enthielt Perfluoroctansäure als Emulgator un Kaliumhydrogensulfat als Puffer. Als Starter diente Ammoniumpersulfat. Polymerisiert wurden 40 Gew.-% TFE, 20 Gew.-% HFP und 40 Gew.-% VdF bei einer Temperatur von 70° C und einem Druck von 9 bar. Als Regler diente Diethylmalonester.

Das Produkt war in Methylethylketon und anderen Lösemitteln löslich. Eine 1-prozentige Lösung in Methylethylketon wies bei 25° C eine reduzierte spezifische Viskosität von 87 cm³ g auf. Mit Hilfe der Gelpermeationschromatographie wurde ein Gewichtsmittelwert der Molmasse von 177 000 bestimmt (Tetrahydrofuran als Lösemittel, gemessen an einer Eichkurve von Polystyrol-Standardpräparaten). Die Zusammensetzung des Polymeren wurde mittels 19-F-NMR-Spektroskopie zu 40 Gew.-Teilen TFE, 20 Teilen HFP und zu 40 Teilen VdF bestimmt. Der Brechungsindex des Copolymeren betrug $n_D^{25}$ = 1,36.

In der DSC waren nur sehr geringe kristalline Anteile zu erkennen.

**Beispiel 2**

100 Gew.-Teile Methylmethacrylat wurde durch Destillation und Filtration durch feinporige Membranfilter von Verunreinigungen befreit, mit 0,1 Teilen Dicumylperoxid und 0,3 Teilen Dodecylmerkaptan versetzt und kontinuierlich in einen auf 100° bis 130° C erhitzten Rührkessel eingespeist. In dem Kessel bildete sich aus dem Monomeren eine sirupartig zähe Masse, die aus Monomerem und Polymerem bestand und die kontinuierlich von dem Kessel in einen Doppelschneckenextruder überführt wurde. Im Doppelschneckenextruder erhöhte sich der Polymeranteil durch fortgesetzte Polymerisation bei 120° bis 170° C auf 80 bis 100 % Umsatz. Überschüssiges freies Monomeres wurde in der Entgasungszone des Extruders im Vakuum abgezogen. Das entstandene Polymere war frei von flüchtigen Bestandteilen und wies einen mittleren Polymerisationsgrad (Gewichtsmittelwert) $P_w$ = 1100 auf.

In der Art und Weise, die im Beispiel 1 beschrieben wurde, wurde ein Copolymer aus VdF, TFE und HFP hergestellt und 100 Gew.-Teile dieses Copolymers entsprechend dem Beispiel 9 DE-P 3327596 mit 2 Gew.-Teilen Trimethoxysilan und 0,2 Gew.-Teilen Dicumylperoxid bei 190° C in einem Zweischneckenkneter umgesetzt, entgast und mit 0,033 Gew.-Teilen Dibutylzinnlaurat verknetet.

In einer Bikomponentendüse wurde das PMMA zum Kern, das modifizierte Vinylidenfluorid-Copolymer zum Mantel eines Lichtwellenleiters verarbeitet. Die Arbeitsparameter der Spinnanlage wurden so eingestellt, daß ein Faden von 1 mm Durchmesser mit einer 10 µm dicken Mantelschicht entstand. Der Lichtwellenleiter wurde für 10 Stunden einer wasserdampfhaltigen Atmosphäre ausgesetzt.

Nach dieser Behandlung wies er bei 25° C eine Dämpfung von 420 dB/km bei 650 nm auf. Die Dämpfung stieg bei 70° C auf 460 dB/km, bei 120° C auf 520 dB/km und nahm erst bei noch höherer Temperatur stärker zu. Der Lichtwellenleiter konnte ohne merkliche Verminderung der Transparenz um einen Stab mit einem Durchmesser von 10 mm gewunden werden.

**Beispiel 3**

In der Art und Weise, die im Beispiel 1 beschrieben wurde, wurde ein Copolymer aus 60 Gew.-Teilen VdF und 40 Gew.-Teilen TFE hergestellt und, wie im Beispiel 2 beschrieben, mit 2 Gew.-Teilen Trimethoxysilan, 0,2 Gew.-Teilen Dicumylperoxid und 0,08 Gew.-Teilen Dibutylzinnlaurat vermischt.

In einer Bikomponentendüse wurde PMMA zum Kern, das modifizierte Vinylidenfluorid-Copolymer zum Mantel eines Lichtwellenleiters verarbeitet. Die Arbeitsparameter der Spinnanlage wurden so eingestellt, daß ein Faden von 1 mm Durchmesser mit einer 10 µm dicken Mantelschicht entstand. Der Lichtwellenleiter wurde für 10 Stunden einer wasserdampfhaltigen Atmosphäre ausgesetzt. Nach dieser Behandlung wies er bei 25° C eine Dämpfung von 480 dB/km bei 650 nm auf. Die Dämpfung stieg bei 70° C auf 530 dB/km, bei 120° C auf 580 dB/km und nahm erst bei noch höherer Temperatur stärker zu. Der Lichtwellenleiter konnte ohne merkliche Verminderung der Transparenz um einen Stab von 25 mm Durchmesser gewunden werden.

**Beispiel 4**

In der Art und Weise, die im Beispiel 1 beschrieben wurde, wurde ein Copolymer aus 93 Gew.-Teilen VdF und 7 Gew.-Teilen HFP hergestellt, mit 2 Gew.-Teilen Trimethoxyvinylsilan und 0,2 Gew.-Teilen Dicumylperoxid umgesetzt, in einem Zweischneckenextruder aufgeschmolzen, entgast und mit 0,08 Gew.-Teilen Dibutylzinnlaurat innig vermischt.

In einer Bikomponentendüse wurde das PMMA zum Kern, das modifizierte Vinylidenfluorid-Copolymer zum Mantel eines Lichtwellenleiters verarbeitet. Die Arbeitsparameter der Spinnlage wurden so eingestellt, daß ein Faden von 1 mm Durchmesser mit einer 10 µm dicken Mantelschicht entstand. Der Lichtwellenleiter wurde für 10 Stunden einer wasserdampfhaltigen Atmosphäre ausgesetzt. Nach dieser Behandlung wies er bei 25°C eine Dämpfung von 430 dB/km bei 650 nm auf. Die Dämpfung stieg bei 70°C auf 450 dB/km, bei 120°C auf 500 dB/km und nahm erst bei noch höherer Temperatur stärker zu. Der Lichtwellenleiter konnte ohne merkliche Verminderung der Transparenz um einen Stab von 25 mm Durchmesser gewunden werden.

### Beispiel 5

In der Art und Weise, die in der GB-PS 21 61 954 angegeben ist, wurde ein Copolymeres aus 82 Gew.-Teilen VdF und 18 Gew.-Teilen Hexafluoraceton hergestellt und in der Art und Weise, die im Beispiel 2 beschrieben wurde mit 2 Gew.-Teilen Trimethoxyvinylsilan und 0,2 Gew.-Teilen Dicumylperoxid umgesetzt, in einem Zweischneckenextruder aufgeschmolzen, entgast und mit 0,08 Gew.-Teilen Dibutylzinnlaurat innig vermischt.

In einer Bikomponentendüse wurde PMMA zum Kern, das modifizierte Vinylidenfluorid-Copolymer zum Mantel eines Lichtwellenleiters verarbeitet. Die Arbeitsparameter der Spinnanlage wurden so eingestellt, daß ein Faden von 1 mm Durchmesser mit einer 10 µm dicken Mantelschicht entstand. Der Lichtwellenleiter wurde für 10 Stunden einer wasserdampfhaltigen Atmosphäre ausgesetzt. Nach dieser Behandlung wies er bei 25°C eine Dämpfung von 550 dB/km bei 650 nm auf. Die Dämpfung stieg bei 70°C auf 670 dB/km, bei 120°C auf 710 dB/km und nahm erst bei noch höherer Temperatur stärker zu. Der Lichtwellenleiter konnte ohne merkliche Verminderung der Transparenz um einen Stab von 25 mm Durchmesser gewunden werden.

### Beispiel 6

In der Art und Weise, die im Beispiel 2 angegeben wurde, wurde ein Lichtwellenleiter hergestellt, wobei anstelle der angegebenen Mischung aus MMA, Dicumylperoxid und Dodecylmerkaptan ein Gemisch aus 30 Gew.-Teilen MMA, 62 Gew.-Teilen Methacrylsäurenorbornylester und 1 Gew.-Teil Acrylsäuremethylester sowie 0,1 Gew.-Teilen tert.-Butylperoxid und 0,3 Gew.-Teilen Dodecylmerkaptan dem Rührkessel bei einer Polymerisationstemperatur von 130°C zugeführt wurde. Das in einem Extruder mit Entgasungszone auspolymerisierte und von flüchtigen Bestandteilen befreite Polymere wies einen Polymerisationsgrad $P_w$ von 850 auf. Die Glasübergangstemperatur wurde mit Hilfe der DSC-Methode zu 151°C bestimmt.

Der Lichtwellenleiter wies einen Durchmesser von 0,5 mm, der Mantel eine Schichtdicke von 10 µm auf. Er wurde mit 30 Mrad γ-strahlung aus einer Co(60)-Quelle behandelt.

Der Lichtwellenleiter zeigte nach 1 tägiger Lagerung an Luft eine Lichtdämpfung von 780 dB/km bei 25°C, von 820 dB/km bei 70°C und 650 nm und von 910 dB/km bei 120°C. Die Lichtdämpfung stieg zwar beim weiteren Erwärmen auf 150°C auf über 2000 dB/km an, nach dem Abkühlen wurden die Ausgangswerte jedoch nahezu wieder erreicht (750 dB/km bei 25°C).

Der Lichtwellenleiter konnte ohne einen Verlust an Lichtdurchlässigkeit um einen runden Stab mit einem Durchmesser von 25 mm gewunden werden.

### Vergleichsbeispiel A

Ein Lichtwellenleiter, der nach den Angaben in Beispiel 2 aus PMMA als Kern und einem unmodifizierten VdF-TFE-HFP-Terpolymer als Mantel hergestellt worden war, wies eine Lichtdämpfung bei 25°C von 250 dB/km, bei 70°C von 280 dB/km auf. Der Lichtwellenleiter wurde in einem Luftbad für 15 min. auf 110°C erwärmt, danach wieder auf 25°C abgekühlt. Die Dämpfung betrug danach 3100 dB/km.

### Ansprüche

1. Lichtwellenleiter mit Kern/Mantel-Struktur, dessen Kern aus einem Polymer mit einem Brechungsindex n(K) und dessen Mantel aus einem Polymeren mit einem Brechungsindex n(M) besteht, wobei n(K)/n(M) > 1,01 ist, dadurch gekennzeichnet, daß der Kern aus einem Polycarbonat oder aus einem Polymer besteht, welches Einheiten enthält, die sich vom Styrol, von einem substituierten Styrol, einem Acrylat, einem Methacrylat oder einem Fluoracrylat ableiten, und der Mantel aus einem mit 0,1 bis 10 Gew.-%, bezogen auf das unmodifizierte Polymer, eines Trisalkoxyvinylsilans modifizierten und vernetzten Polymer besteht, welches Einheiten enthält, die sich, jeweils bezogen auf das unmodifizierte Polymer, zu 30 bis 90 Gew.-% vom Vinylidenfluorid und zu 70 bis 10 Gew.-% von mindestens einem anderen fluorhaltigen Vinylmonomeren ableiten.

2. Lichtwellenleiter nach Anspruch 1, dadurch gekennzeichnet, daß der Kern aus einem Polymer besteht, welches Einheiten enthält, die sich von α-Fluoracrylaten, Acrylaten oder Methacrylaten ableiten.

3. Lichtwellenleiter nach Anspruch 1, dadurch gekennzeichnet, daß der Kern ein Polycarbonat ist.

4. Lichtwellenleiter nach Anspruch 1, dadurch gekennzeichnet, daß der Mantel aus einem mit 0,1 bis 10 Gew.-%, bezogen auf das unmodifizierte Polymer, eines Trisalkoxyvinylsilans modifizierten und vernetzten Polymer besteht, welches Einheiten enthält, die sich, jeweils bezogen auf das unmodifizierte Polymer, zu 30 bis 90 Gew.-% vom Vinylidenfluorid und zu 70 bis 10 Gew.-% von mindestens einem anderen fluorhaltigen Vinylmonomeren aus der Gruppe Tetrafluorethylen, Hexafluorpropylen und Hexafluoraceton ableiten.

5. Verfahren zur Herstellung eines Lichtwellenleiters mit Kern/Mantel-Struktur, dessen Kern aus einem Polymer mit einem Brechungsindex n(K) und dessen Mantel aus einem Polymer mit einem Brechungsindex n(M) besteht, wobei n(K)/n(M) > 1, 01 ist, durch Extrusion des Kerns und Umgeben des Kerns mit einem Mantel, dadurch gekennzeichnet, daß der Kern aus einem Polycarbonat oder einem Polymer extrudiert wird, welches Einheiten enthält, die sich vom Styrol, von einem substituierten Styrol, einem Acrylat, einem Methacrylat oder einem Fluoracrylat ableiten, und mit einem Mantel aus einem mit 0,1 bis 10 Gew.-%, bezogen auf das unmodifizierte Polymer, eines Trisalkoxyvinylsilans modifizierten und in Gegenwart von 0,05 bis 0,5 Gew.-%, bezogen auf das unmodifizierte Polymer, eines Umsilylierungskatalysators durch Feuchtigkeitseinfluß vernetzten Polymer umgeben wird, welches Einheiten enthält, die sich, jeweils bezogen auf das unmodifizierte Polymer, zu
30 bis 90 Gew.-% vom Vinylidenfluorid und zu
70 bis 10 Gew.-% von mindestens einem anderen fluorhaltigen Vinylmonomeren ableiten.

6. Verfahren nach Anspruch 5, dadurch gekennzeichnet, daß Kern und Mantel durch Coextrusion gleichzeitig hergestellt werden.

7. Verfahren zur Herstellung eines Lichtwellenleiters mit Kern/Mantel-Struktur, dessen Kern aus einem Polymer mit einem Brechungsindex n(K) und dessen Mantel aus einem Polymer mit einem Brechungsindex n(M) besteht, wobei n(K)/n(M) > 1,01 ist, dadurch gekennzeichnet, daß zunächst der Mantel aus einem mit 0,1 bis 10 Gew.-%, bezogen auf das unmodifizierte Polymer, eines Trisalkoxyvinylsilans modifizierten und 0,05 bis 0,5 Gew.-%, bezogen auf das unmodifizierte Polymer, eines Umsilylierungskatalysators enthaltenden Polymer, welches Einheiten enthält, die sich, jeweils bezogen auf das unmodifizierte Polymer, zu
30 bis 90 Gew.-% vom Vinylidenfluorid und zu
70 bis 10 Gew.-% von mindestens einem anderen fluorhaltigen Vinylmonomeren ableiten, als Schlauch extrudiert und durch Feuchtigkeitseinfluß vernetzt wird und danach dieser Schlauch zur Bildung des Kernes mit einem niedrigviskosen transparenten Präpolymer, welches Einheiten enthält, die sich vom Styrol, von einem substituierten Styrol, einem Acrylat, einem Methacrylat, einem Fluoracrylat oder einem polymerisierbaren Carbonat ableiten, gefüllt und die Füllung auspolymerisiert wird.

8. Verwendung des Lichtwellenleiters nach Anspruch 1 zur Übertragung von Lichtsignalen.